Europäisches Patentamt

European Patent Office

Office européen des brevets

(11) Numéro de publication : **0 075 357**
**B1**

## (12) FASCICULE DE BREVET EUROPÉEN

(45) Date de publication du fascicule du brevet :
07.08.85

(51) Int. Cl.⁴ : **H 02 P 7/62**

(21) Numéro de dépôt : **82201127.6**

(22) Date de dépôt : **10.09.82**

(54) **Circuit d'alimentation d'une machine électrique asynchrone polyphasée.**

(30) Priorité : **17.09.81 CH 6002/81**

(43) Date de publication de la demande :
**30.03.83 Bulletin 83/13**

(45) Mention de la délivrance du brevet :
**07.08.85 Bulletin 85/32**

(84) Etats contractants désignés :
**DE FR GB IT NL SE**

(56) Documents cités :
**DE-A- 2 333 978**
**FR-A- 2 359 531**
**US-A- 3 427 526**

(73) Titulaire : **SPINCOR S.A.**
**3-5 rue du Grand-Pré**
**CH-1000 Lausanne 16 (CH)**

(72) Inventeur : **Mathey, Valentin**
**Chemin René-Morax 9**
**CH-1110 Morges (CH)**

(74) Mandataire : **Meylan, Robert Maurice et al**
**c/o Bugnion SA Conseils en Propriété Industrielle 10,**
**Route de Florissant Case Postale 375**
**CH-1211 Genève 12 - Champel (CH)**

EP 0 075 357 B1

Jouve, 18, rue St-Denis, 75001 Paris, France

## Description

La présente invention concerne un circuit d'alimentation d'une machine électrique asynchrone polyphasée comportant un convertisseur statique de fréquence alimenté par une source de courant continu pour engendrer un courant alternatif quasi sinusoïdal et comprenant à cet effet au moins une paire d'éléments semi-conducteurs de commutation attribuée à chaque phase et en parallèle auxquels sont branchées des diodes normalement polarisées en tension inverse par la tension de la source, des moyens de commande des éléments de commutation rendant ces éléments alternativement conducteurs, le circuit comprenant en outre une inductance en série avec le convertisseur, une diode polarisée en tension inverse par la source branchée en parallèle au convertisseur et à l'inductance, des moyens de mesure du courant alternatif instantané comprenant un élément de mesure traversé uniquement par le courant ayant traversé les éléments de commutation, le courant mesuré étant utilisé pour commander un commutateur destiné à couper l'alimentation du convertisseur lorsque le courant mesuré dépasse un seuil supérieur et rétablir l'alimentation du convertisseur lorsque ce courant descend au-dessous d'un seuil inférieur, le convertisseur étant du type à circuit intermédiaire à tension continue et comprenant à cet effet un condensateur branché en parallèle à ses bornes d'entrée.

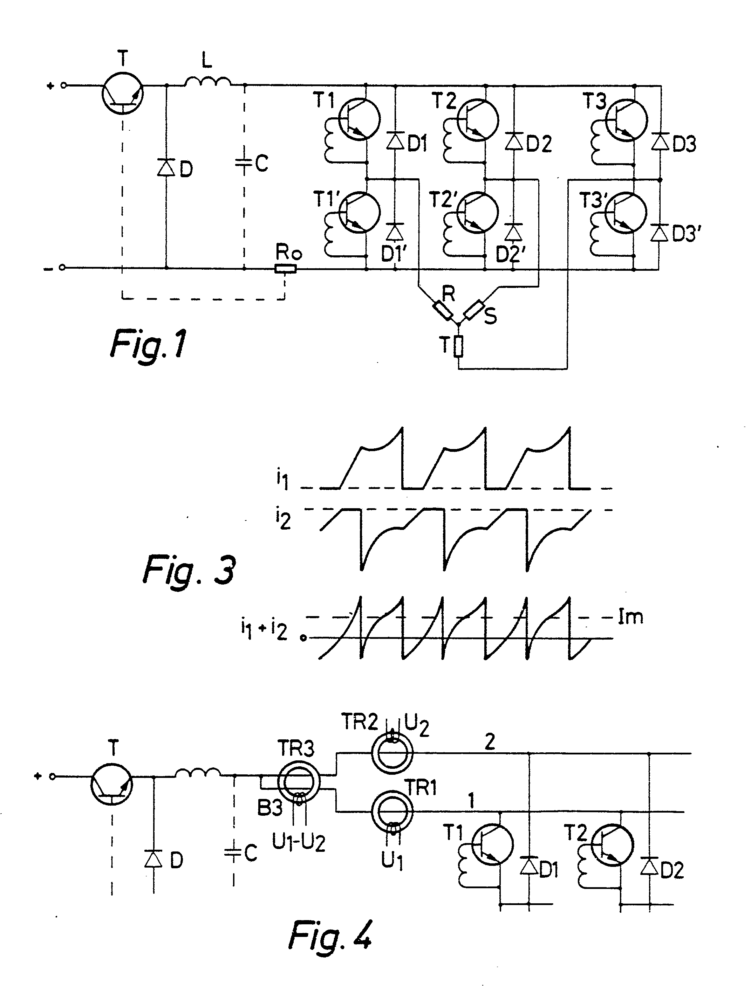

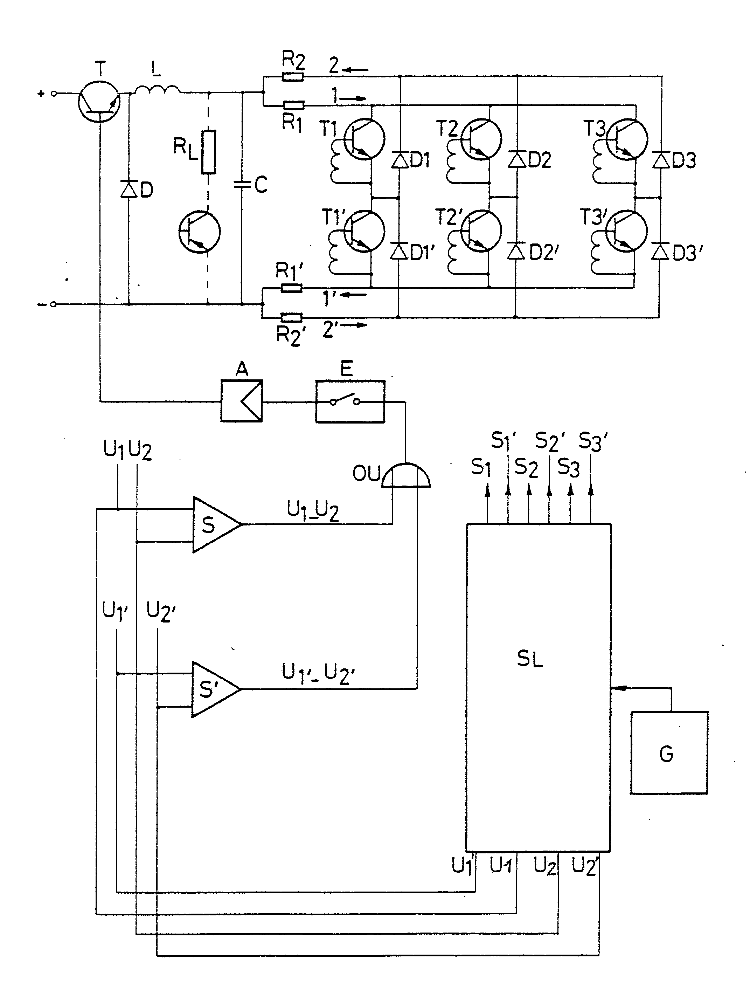

Un circuit d'alimentation connu est représenté schématiquement à la figure 1. Un tel circuit comprend un convertisseur statique ou onduleur constitué de trois paires de transistors de commutation T1-T1', T2-T2', T3-T3' en parallèle auxquels sont branchées des diodes D1 à D3'. Les transistors sont commutés tour à tour, de manière connue en soi, par exemple de manière inductive, pour assurer l'alimentation des trois phases R, S, et T d'un moteur triphasé. Un tel circuit peut être du type à circuit intermédiaire à courant continu ou à circuit intermédiaire à tension continue. Dans le premier cas il comporte simplement une diode D en parallèle avec l'onduleur et l'inductance L.

Le courant continu instantané est mesuré au moyen d'une résistance Ro branchée entre la borne négative de la source et l'onduleur. Le courant mesuré est utilisé pour commander la commutation d'un interrupteur constitué par un transistor T. Dans un tel convertisseur à circuit intermédiaire à courant continu, les transistors de commutation du pont onduleur travaillent un seul à la fois, en haut et en bas, et conduisent chaque fois, délivrant un courant rectangulaire d'un angle électrique de 120°, dont l'amplitude peut être réglée en amont par l'élément de commutation T. On constate dans ce cas que les diodes de récupération du pont onduleur ne travaillent pas. Dans ces conditions et dans celles-ci seulement, le courant traversant l'élément de mesure, soit la résistance Ro, est bien l'image du courant traversant les transistors du pont onduleur, ainsi que les bobinages du moteur. Ce type d'alimentation est cependant limité à l'alimentation d'un seul moteur, la mise en parallèle de plusieurs moteurs étant difficile, sinon impossible. Pour pouvoir brancher plusieurs moteurs en parallèle sur la source de courant continu, il faut une alimentation en tension et non en courant et le convertisseur doit être du type à circuit intermédiaire à tension continue, que l'on réalise en branchant un condensateur C à l'entrée du convertisseur, comme représenté en pointillé. Dans ce cas la bidirectionnalité du courant, c'est-à-dire le passage du courant de puissance et le passage du courant réactif, est assuré respectivement par les éléments de commutation et les diodes anti-parallèles, le cas échéant à travers le condensateur C. La résistance de mesure du courant ne mesure toutefois que la valeur instantanée du courant dans le convertisseur, qui n'est ni le courant dans le transistor conducteur, ni le courant réactif dans la diode correspondante, ni le courant dans le moteur, ni la valeur moyenne du courant dans le convertisseur. Il n'y a pas de distinction entre le courant actif et le courant réactif. En outre, lorsque le moteur vient à être entraîné par la charge à une vitesse excessive, l'élément de mesure du courant constatera bien que le moteur est devenu générateur mais son action sur le commutateur sera sans effet. Les pointes de courant dangereuses pour les éléments de commutation semi-conducteur du pont onduleur seront tout au plus constatées mais non supprimées.

Dans la demande de brevet FR-A-2 359 531, on a déjà proposé d'améliorer la protection des éléments de commutation en prévoyant, en plus de la résistance mesurant le courant continu total, une résistance traversée uniquement par le courant qui a traversé les éléments de commutation. Aucun moyen n'est toutefois prévu pour distinguer le courant réactif du courant continu total, c'est-à-dire pour reconnaître que le moteur est devenu générateur.

La présente invention a pour but de contrôler distinctement le courant actif ou de puissance, le courant réactif et le courant moyen correspondant au courant watté dans le moteur, ceci par des moyens aussi simples que dans l'art antérieur.

A cet effet, le circuit d'alimentation selon l'invention est caractérisé par le fait que les moyens de mesure du courant alternatif instantané sont constitués essentiellement par des éléments de mesure branchés respectivement entre au moins l'une des bornes du condensateur et, d'autre part, l'une des extrémités des paires d'éléments de commutation du convertisseur et, d'autre part, entre cette même borne du condensateur et les bornes communes des diodes correspondantes du convertisseur, des moyens étant prévus pour obtenir la somme algébrique des courants mesurés par lesdits éléments de mesure et pour couper l'alimentation du convertisseur lorque cette somme dépasse un certain seuil.

La valeur du courant actif mesurée permet aisément, au moyen d'un circuit logique, de bloquer et de débloquer l'un ou l'autre des éléments de commutation du convertisseur ou l'ensemble de ces éléments entre deux seuils de courant prédéterminés. La valeur du courant réactif mesurée permet de contrôler le courant dans les diodes. Si ces courants dépassent la valeur limite imposée par ces diodes, on bloque l'ensemble du pont onduleur en bloquant tous ses éléments de commutation. Le courant s'écoule alors à travers le condensateur.

D'autre part, lorsque le moteur travaille en générateur, le courant réactif est plus grand que le courant actif et la somme algébrique de ces courants change de signe. La détection du changement de signe de la valeur moyenne de cette somme, c'est-à-dire de la moyenne des courants peut être utilisée pour brancher une résistance de charge commutable aux bornes du convertisseur, en parallèle au condensateur.

Dans la demande de brevet DE-A-2.333.978 il a déjà été proposé, dans un convertisseur statique alimenté par une source de courant continu, de brancher des résistances de mesure, d'une part entre la borne négative de la source et les éléments de commutation du convertisseur et, d'autre part, entre la même borne négative et les diodes montées parallèlement aux éléments de commutation. Les courants mesurés ne sont toutefois pas utilisés de la même manière et il n'est pas prévu d'en faire la somme algébrique.

Le dessin annexé représente, à titre d'exemple. une forme d'exécution de l'invention ainsi qu'une variante de celle-ci.

La figure 2 est une schématique de l'installation.

La figure 3 représente la forme des courants mesurés.

La figure 4 représente partiellement une variante d'exécution.

On retrouve dans la figure 2 le pont onduleur représenté à la figure 1, l'inductance en série L, la diode D et le condensateur C en parallèle et le transistor T pour la coupure de la source de courant continu. Le circuit comporte en outre quatre résistances de mesure du courant instantané R2, R1, R1' et R2', les résistances R1 et R1' étant branchées entre chacune des bornes du condensateur C et les extrémités des paires d'éléments de commutation du pont T1-T1', etc, tandis que les résitances R2 et R2' sont branchées entre chacune des bornes du condensateur C et les diodes anti-parallèles D1, D1', etc, du pont onduleur. On a ainsi séparé les courants actifs des courants réactifs. Le sens des courants est indiqué par les flèches sur les lignes 1, 2 et 1', 2'. Par des moyens connus, on mesure la chute de tension U1, U2, U1' et U2' sur ces résistances, ou une tension proportionnelle. Ces tensions sont appliquées, d'une part, à un circuit SL constitué d'un circuit de commande séquentielle des éléments de commutation du pont onduleur commandé par un générateur de fréquence G et une logique de contrôle intervenant sur le circuit de commande séquentielle lorsque les signaux U1, U1', U2 ou U2' dépassent un certain seuil. Le circuit SL comprend six sorties S1, S1', S2, S2', S3, S3' associées respectivement à chacun des transistors de commutation du pont onduleur pour assurer la commutation de ces transistors.

Les tensions U1 et U2 sont appliquées d'autre part à un circuit sommateur S, constitué par exemple par un amplificateur opérationnel, qui effectue la somme algébrique U1-U2. De manière identique les tensions U1' et U2' sont appliquées à un second circuit sommateur S' qui effectue la somme algébrique U1'-U2'. Ces sommes algébriques sont utilisées pour commander l'interrupteur à transistor T après amplification par l'amplificateur A. Le schéma a été complété logiquement par une porte OU et un régulateur à deux paliers E.

Le signal U1 permet à lui seul, au moyen d'un circuit logique adéquat, de bloquer et de débloquer tout ou partie des transistors du pont onduleur. Le signal U2 permet de contrôler le courant dans les diodes du pont. Si ce courant dépasse une valeur limite le circuit SL commandera le blocage de tous les transistors du pont. Le courant réactif est alors absorbé par le condensateur C qui se charge.

Il suffirait donc en principe d'avoir les résistances R1 et R2 dans les lignes 1 et 2, mais il est judicieux de prévoir également les résistances R1' et R2' dans les lignes 1' et 2' pour assurer une protection parfaite en cas d'accident.

Comme il a été dit plus haut, il est possible de déduire la moyenne du courant, c'est-à-dire l'intensité du courant moteur, à partir de la somme algébrique U1-U2, respectivement U1'-U2'. A cet effet il suffit d'intégrer cette somme pour obtenir une composante continue utilisable pour commander la commutation d'une résistance de charge $R_L$, branchée en parallèle au condensateur C, comme indiqué en pointillé à la figure 2, lorsque la moyenne de la somme algébrique $U_1-U_2$ change de signe, signifiant que le courant réactif est plus grand que le courant actif, c'est-à-dire que le moteur travaille en générateur.

La forme des tensions U1 et U2, c'est-à-dire des courants sur les lignes 1 et 2, est représentée à la figure 3. La première ligne de la figure 3 montre la forme du courant $i_1$, c'est-à-dire la forme de la tension U1, qui correspond au courant actif traversant les transistors du pont onduleur. En dessous on a représenté la forme du courant réactif $i_2$ traversant les diodes et proportionnelle à la tension U2. En dessous on a représenté la somme algébrique $i_1 + i_2$ qui correspond à la différence des tensions U1-U2. $I_m$ représente la composante continue de la valeur moyenne de cette somme.

Les dispositifs de mesure du courant peuvent être constitués par d'autres éléments que les résistances. A titre d'exemples, la figure 4 illustre l'utilisation des transformateurs de courant toriques TR1, TR2 et TR3. Les deux premiers tores sont traversés respectivement par les lignes 1 et 2, tandis que le troisième tore du transformateur TR3 est traversé par les deux lignes 1 et 2, de telle sorte qu'il délivre directement la différence U1-U2 sur son enroulement secondaire B3.

**Revendications**

1. Circuit d'alimentation d'une machine asynchrone polyphasée comportant un convertisseur statique de fréquence alimenté par une source de courant continu pour engendrer un courant alternatif quasi sinusoïdal et comprenant à cet effet au moins une paire d'éléments semi-conducteurs de commutation (T1, T1' ... T3') attribuée à chaque phase et en parallèle auxquels sont branchées des diodes (D1, D1' ... D3') normalement polarisées en tension inverse par la tension de la source, des moyens de commande des éléments de commutation rendant ces éléments alternativement conducteurs, le circuit comprenant en outre une inductance (L) en série avec le convertisseur, une diode (D) polarisée en tension inverse par la source est branchée en parallèle au convertisseur et à l'inductance (L), des moyens de mesure du courant alternatif instantané comprenant un élément de mesure (R1 ; TR1) traversé uniquement par le courant ayant traversé les éléments de commutation (T1 ... T3'), le courant mesuré étant utilisé pour commander un commutateur (T) destiné à couper l'alimentation du convertisseur lorsque le courant mesuré dépasse un seuil supérieur et rétablir l'alimentation du convertisseur lorsque ce courant descend au-dessous d'un seuil inférieur, le convertisseur étant du type à circuit intermédiaire à tension continue et comprenant à cet effet un condensateur (C) branché en parallèle à ses bornes d'entrée, caractérisé par le fait que les moyens de mesure du courant alternatif instantané sont constitués essentiellement par des éléments de mesure (R1, R2 ; TR1, TR2) branchés respectivement entre au moins l'une des bornes du condensateur (C) et, d'une part, l'une des extrémités des paires d'éléments de commutation (T1 ... T3') du convertisseur et, d'autre part, entre cette même borne du condensateur (C) et les bornes communes des diodes correspondantes (D1 ... D3') du convertisseur, des moyens (S ; TR3) étant prévus pour obtenir la somme albégrique des courants mesurés par lesdits éléments de mesure et pour couper l'alimentation du convertisseur lorsque cette somme algébrique dépasse un certain seuil.

2. Circuit d'alimentation selon la revendication 1, caractérisé par le fait qu'il comprend également des éléments de mesure du courant (R1', R2') entre l'autre borne du condensateur (C) et, respectivement, l'autre extrémité des paires d'éléments de commutation (T1 ... T3') et l'autre borne commune des diodes (D1 ... D3').

3. Circuit d'alimentation selon la revendication 2, comprenant un circuit logique (SL) pour la commande séquentielle des éléments de commutation, caractérisé par le fait que les valeurs de courant mesurées par chacun des éléments de mesure (R1, R2, R1', R2' ; TR1, TR2) sont appliquées à ce circuit logique (SL) pour bloquer tout ou partie des éléments de commutation lorsque le courant mesuré dans au moins l'un des éléments de mesure dépasse un certain seuil.

4. Circuit d'alimentation selon l'une des revendications 1 à 3, caractérisé par le fait que les éléments de mesure du courant sont des résistances (R1, R2, R1', R2').

5. Circuit d'alimentation selon l'une des revendications 1 à 3, caractérisé par le fait que les éléments de mesure du courant sont constitués par des transformateurs toriques (TR1, TR2).

6. Circuit d'alimentation selon la revendication 5, caractérisé par le fait que les moyens pour obtenir la somme des courants mesurés sont également constitués par un transformateur torique (TR3).

7. Circuit d'alimentation selon l'une des revendications 1 à 3, caractérisé par le fait qu'il comprend une résistance de charge commutable (R_L), en parallèle au condensateur (C), des moyens pour établir la valeur moyenne des courants mesurés par lesdits éléments de mesure, et des moyens pour brancher ladite résistance lorsque la valeur moyenne du courant change de signe, c'est-à-dire lorsque le moteur travaille en générateur.

**Claims**

1. A feed power supply circuit for a multiphase asynchronous machine comprising a static frequency converter fed from a direct current source for generating a nearly sine alternating current and comprising for this purpose at least one pair of semi-conducting switching elements (T1, T1' ... T3') associated with each phase and in parallel, and to which diodes (D1, D1' ... D3') normally biased to an inverse voltage by the source voltage are connected, means for so controlling said switching elements as to make them conductive by turns, said circuit further comprising an inductance coil (L) connected in series to said converter, a diode (D) biased to an inverse voltage by said source and connected in parallel to said converter and inductance coil (L), means for measuring the instantaneous alternating current which comprise a measuring element (R1 ; TR1) receiving therethrough only the current having passed through said switching elements (T1 ... T3'), the measured current being utilized for controlling a switch (T) adapted to switch off the converter feed current when said measured current exceeds a predetermined upper threshold and to restore the supply of current to said converter when said current drops below a predetermined lower threshold, said converter being of the direct-current intermediate circuit type and comprising for this purpose a capacitor (C) connected in parallel to the input terminals of said converter, characterized in that said means for measuring the instantaneous alternating current consist essentially of measuring elements (R1, R2 ; TR1, TR2) connected between at least one of the terminals of said capacitor (C), on the one hand, one end of said pairs of switching elements (T1 ... T3') of said converter and, on the other hand, between said same terminal of said capacitor (C) and the common terminals of the corresponding diodes (D1 ... D3') of said converter, means (S ; TR3) being provided for obtaining the algebraic sum of the currents measured by said measuring elements and cutting off the power supply of said converter when said algebraic sum exceeds a predetermined threshold.

2. The feed power supply circuit of claim 1, characterized by the fact that it also comprises elements (R1', R2') for measuring the current between the other terminal of said capacitor (C) and, respectively, the other end of said pair of switching elements (T1 ... T3') and the other common terminal of said diodes (D1 ... D3').

3. The feed power supply circuit of claim 2, comprising a logic circuit (SL) for sequentially controlling switching elements, characterized by the fact that the current values measured by each measuring element (R1, R2, R1', R2' ; TR1, TR2) are fed to said logic circuit (SL) for locking the whole or part of said switching elements when the current measured in at least one of said measuring elements exceeds a predetermined threshold.

4. The feed power supply circuit of any of claims 1-3, characterized by the fact that the current measuring elements consists of resistors (R1, R2, R1', R2').

5. The feed power supply circuit of any of claims 1-3, characterized by the fact that the current measuring elements consist of toroidal transformers (TR1, TR2).

6. The feed power supply circuit of claim 5, characterized by the fact that the means for obtaining the sum of the measured currents also consist of a toroidal transformer (TR3).

7. The feed power supply circuit of any of claims 1-3, characterized by the fact that it comprises a switchable load resistor (RL) connected in parallel to said capacitor (C), means for determining the average value of the currents measured by said measuring elements, and means for connecting in said resistor when the sign of the average value of said current changes, i. e. when the motor operates as a generator.


**Patentansprüche**

1. Speiseschaltung einer mehrphasigen elektrischen Asynchronmaschine mit einem statischen Frequenzwandler, der von einer gleichstromquelle gespeist wird, um einen fast sinusförmigen Wechselstrom zu erzeugen, und der hierzu wenigstens ein Paar jeder Phase zugeordnete Halbleiterumschaltelemente (T1, T1' ... T3') aufweist, zu denen Dioden (D1, D1' ... D3') parallelgeschaltet sind, welche normalerweise durch die Spannung der Quelle in umgekehrter Spannung polarisiert sind, sowie mit einer Steuerung für die Umschaltelemente, welche diese Elemente abwechselnd zu Leitern macht, und mit einer Induktanz (L) in Reihe mit dem Wandler, wobei eine durch die Quelle in umgekehrter Spannung polarisierte Diode (D) parallel zu dem Wandler und der Induktanz (L) geschaltet ist, ferner mit einer Einrichtung zur Messung des augenblicklichen Wechselstromes mit einem Messelement (R1 ; TR1), welches allein von dem Strom durchflossen wird, nachdem dieser die Schaltelemente (T1 ... T3') durchflossen hat, wobei der gemessene Strom zur Steuerung eines Schalters (T) verwendet wird, welcher dazu dient, die speisung des Wandlers zu unterbrechen, sobald der gemessene Strom einen oberen Schwellwert überschreitet, und die Speisung des Wandlers wieder herzustellen, sobald dieser Strom unter einen unteren Schwellwert absinkt, und wobei der Wandler von der Art eines Gleichspannungs-Zwischenschaltkreises ist und hierzu einen Kondensator (C) aufweist, welcher parallel zu den Eingangsklemmen geschaltet ist, dadurch gekennzeichnet, dass die Messeinrichtung für den augenblicklichen Wechselstrom im wesentlichen aus Messelementen (R1, R2 ; TR1, TR2) besteht, die jeweils einerseits zwischen wenigstens eine der Klemmen des Kondensators (C) und dem einen der enden der Umschaltelementenpaare (T1 ... T3') des Wandlers und andererseits zwischen derselben Klemme des Kondensators (C) und den gemeinsamen Klemmen der entsprechenden Dioden (D1 ... D3) des Wandlers geschaltet sind, und dass eine Einrichtung (S ; TR3) vorgesehen ist, um die algebraische Summe der von diesen Messelementen gemessenen Ströme zu ermitteln und die Speisung des Wandlers zu unterbrechen, sobald diese algebraische Summe einen bestimmten Schwellwert überschreitet.

2. Speiseschaltung nach Anspruch 1, dadurch gekennzeichnet, dass sie gleichfalls Elemente zur Messung des Stromes (R1', R2') zwischen der anderen Klemme des Kondensators (C) und jeweils dem anderen Ende der Umschaltelementenpaare (T1 ... T3') und der anderen gemeinsamen Klemme der Dioden (D1 ... D3) aufweist.

3. Speiseschaltung nach Anspruch 2 mit einem logischen Schaltkreis (SL) zur fortlaufenden Steuerung der Umschaltelemente, dadurch gekennzeichnet, dass die von jedem der Messelemente (R1, R2, R1', R2'; TR1, TR2) gemessenen Stromwerte an diesen logischen Schaltkreis (SL) gegeben werden, um alle oder einen Teil der Umschaltelemente zu blockieren, sobald der in wenigstens einem der Messelemente gemessene Strom einen bestimmten Schwellwert überschreitet.

4. Speiseschaltung nach einem der Ansprüche 1 bis 3, dadurch gekennzeichnet, dass die Elemente zur Messung des Stromes Widerstände (R1, R2, R1', R2') sind.

5. Speiseschaltung nach einem der Ansprüche 1 bis 3, dadurch gekennzeichnet, dass die Elemente zur Messung des Stromes torische Transformatoren (TR1, TR2) sind.

6. Speiseschaltung nach Anspruch 5, dadurch gekennzeichnet, dass die einrichtung zur Ermittlung der Summe der gemessenen Ströme gleichfalls aus einem torischen Transformator (TR3) besteht.

7. Speiseschaltung nach einem der Ansprüche 1 bis 3, dadurch gekennzeichnet, dass sie einen schaltbaren Lastwiderstand (RL) parallel zum Kondensator (C) aufweist sowie eine Einrichtung zur Ermittlung des Mittelwertes der von den Messelementen gemessenen Ströme und eine Einrichtung zum Einschalten dieses Widerstandes, sobald der Strommittelwert das Vorzeichen ändert, d. h. sobald der Motor als Generator arbeitet.

Fig.1

Fig. 3

Fig. 4